# EUROPÄISCHE PATENTSCHRIFT

(11) **EP 2 372 264 B1**
(45) Veröffentlichungstag und Bekanntmachung des Hinweises auf die Patenterteilung: **24.10.2018**
(21) Anmeldenummer: 11001527.8
(22) Anmeldetag: 24.02.2011
(51) Int. Cl.: F24F 12/00, F24F 13/14, F24F 11/00

(54) **Verfahren zum Betreiben eines lufttechnischen Geräts, lufttechnisches Gerät und Raum mit lufttechnischem Gerät**
Method for operating a ventilation device, ventilation device and room with ventilation device
Procédé de fonctionnement d'un appareil d'aération, appareil d'aération et espace doté d'un appareil d'aération

(30) Priorität: 18.03.2010 DE 102010011918
(43) Veröffentlichungstag der Anmeldung: 05.10.2011
(73) Patentinhaber: LTG Aktiengesellschaft, 70435 Stuttgart (DE)
(72) Erfinder: Wagner, Ralf, 70771 Leinfelden-Echterdingen (DE)
(74) Vertreter: Clarenbach, Carl-Philipp

(56) Entgegenhaltungen:
- WO-A1-89/05947
- WO-A1-2009/156146
- DE-A1- 19 954 555
- DE-U1-202008 016 732

## Beschreibung

Die Erfindung betrifft ein Verfahren zum Betreiben eines lufttechnischen Geräts zum Klimatisieren eines Raumes eines Gebäudes oder dergleichen, wobei Zuluft mit Temperaturen in den Raum eingebracht wird, die eine vorgebbare Zuluftminimaltemperatur nicht unterschreiten, das Gerät einen ersten und einen zweiten Luftkanal zum Führen von Außenluft, Zuluft, Abluft, Fortluft und/oder Umluft aufweist, die Luftkanäle eine Querverbindung besitzen sowie wärmetechnisch mittels einer Wärmerückgewinnungseinrichtung koppelbar sind und mittels mindestens einer einstellbaren Verschlusseinrichtung verschließbar oder teilweise oder ganz zu öffnen sind und dabei die Querverbindung ganz geöffnet oder teilweise oder ganz geschlossen wird, und ein die Wärmerückgewinnungseinrichtung umgehender Bypass vorgesehen ist, der mittels einer einstellbaren Verschlussvorrichtung verschließbar oder ganz oder teilweise zu öffnen ist, wobei die Querverbindung - zur Strömungsrichtung der Außenluft betrachtet - stromaufwärts zur Wärmerückgewinnungseinrichtung ausgebildet ist.

Ein derartiges Verfahren geht aus der DE 10 2008 063 555 A1 oder EP 2 194 329 A1 hervor. Beim Betreiben eines derartigen lufttechnischen Geräts wird Außenluft angesaugt und dem Raum zugeführt. Ferner wird Abluft dem Raum entnommen und als Fortluft an die Umgebung abgegeben. Aus energetischen Gründen ist die Wärmerückgewinnungseinrichtung vorgesehen, um - zum Beispiel im Winter - der warmen Abluft Wärme zu entziehen und diese der kalten eingebrachten Außenluft zuzuführen, um Letztere vorzuwärmen, bevor sie in den Raum gelangt. Bei zumindest teilweise geöffneter Querverbindung ist ein Umluftbetrieb realisiert. Dabei wird vorzugsweise zumindest ein Anteil der Abluft in den Raum zurückgeführt, insbesondere der Außenluft zugemischt. Um die Zulufttemperatur, also die Temperatur der in den Raum eingebrachten Luft, nicht unter eine Mindesttemperatur fallen zu lassen, wodurch im Aufenthaltsbereich des Raumes ein Diskomfort auftreten kann, weist das lufttechnische Gerät zur thermischen Nachbehandlung einen Nacherhitzer auf. Die Zuluft wird beispielsweise nach Durchströmen der Wärmerückgewinnungseinrichtung durch den Nacherhitzer geleitet und auf eine Temperatur erwärmt, die im Aufenthaltsbereich des Raums als angenehm empfunden wird. Diese Nacherhitzung der Luft ist insbesondere dann erforderlich, wenn die Wärmerückgewinnungseinrichtung wegen Einfrierens mit einem Bypass umfahren werden muss und daher ihre wärmeübertragende Funktion nicht weiter übernehmen kann. Das Problem des Einfrierens der Wärmerückgewinnungseinrichtung kann ebenfalls durch einen Erhitzer gelöst werden, der die Abluft vor dem Durchströmen durch die Wärmerückgewinnungseinrichtung zusätzlich erwärmt oder der die Außenluft vorwärmt, bevor sie durch die Wärmewirkgewinnungseinrichtung geleitet wird.

Aus der WO 2009/156146 A1 geht ein lufttechnisches Gerät hervor, das nach dem eingangs genannten Verfahren betreiben werden kann. Das Gerät verfügt über eine Querverbindung zwischen einem Fortluft- und einem Außenluftkanal. Ferner weist es einen Bypass auf, der einen Wärmetauscher überbrückt. Sowohl Leitungen des Bypasses als auch die Querverbindung sind mit Verschlusseinrichtungen versehen. Das lufttechnische Gerät wird derart betrieben, dass eine Minderung der Strömungswiderstände herbeigeführt wird.

Aus der WO 89/05947 A1 geht ein Verfahren zum Betreiben eines lufttechnischen Geräts hervor. Zur Minderung einer Einfriergefahr wird ein Bypass eines Wärmetauschers betätigt. Ein Umluftbetrieb ist nicht möglich.

Der Erfindung liegt die Aufgabe zugrunde, keinen Diskomfort im Raum auftreten zu lassen und überdies ein Einfrieren der Wärmerückgewinnungseinrichtung zu vermeiden. Insbesondere dann, wenn feuchte, warme Abluft durch der Wärmerückgewinnungseinrichtung zugeführte kalte Außenluft stark abgekühlt wird, ist die Gefahr eines Kondensierens und Gefrierens in der Wärmerückgewinnungseinrichtung gegeben. Die genannte Aufgabe soll mit möglichst geringem Aufwand bewältigt werden.

Die Aufgabe wird durch die Merkmale des Verfahrens nach Anspruch 1 und die Merkmale der Vorrichtung nach Anspruch 11 gelöst. Dabei ist vorgesehen, dass - ausgehend von ganz geöffneten Luftkanälen und geschlossener Querverbindung sowie ganz geöffnetem Bypass - bei abnehmenden Außenlufttemperaturen zunächst mittels der Verschlussvorrichtung der Bypass soweit geschlossen wird, dass die Zuluft die Zuluftminimaltemperatur nicht unterschreitet und anschließend bei noch weiter sinkenden Außentemperaturen die Verschlusseinrichtung die Luftkanäle soweit schließt und dadurch die Querverbindung soweit öffnet, dass die Temperaturen der Fortluft eine vorgebbare Fortluftminimaltemperatur nicht unterschreitet, wobei gleichzeitig mittels der Verschlussvorrichtung der Bypass so eingestellt wird, dass weiterhin die Zuluft die Zuluftminimaltemperatur nicht unterschreitet. Durch diese Maßnahmen ist im Ganzjahresbetrieb sichergestellt, dass der Raum, insbesondere der Aufenthaltsbereich des Raumes, ein angenehmes Raumklima aufweist, wobei gleichzeitig ein Einfrieren der Wärmerückgewinnungseinrichtung verhindert ist. Der Außenluftvolumenstrom wird bei sehr kalten Außenluftbedingungen sukzessive (insbesondere kontinuierlich) reduziert, wobei stets im ganzjährigen Lüftungs-/Klimatisierungsbetrieb angenehme Zulufttemperaturen vorherrschen, da die Zuluft die vorgebbare Zuluftminimaltemperatur nicht unterschreitet. Die Reduzierung des Außenluftvolumenstroms bei extrem niedrigen Außentemperaturen entspricht hierbei einem natürlichen Nutzerverhalten bei einer Fensterlüftung und begrenzt den Lüftungswärmebedarf. Demnach hilft dieses Vorgehen eine installierte Spitzenheizleistung entsprechend niedrig auszulegen. Aufgrund der Erfindung ergeben sich wesentliche Vorteile beim Betrieb des lufttechnischen Geräts. So kann auf eine geräteinterne Nacherhitzung/Erhitzung (hierunter ist nicht die Wärmerückgewinnungseinrichtung zu verstehen) ganzjährig verzichtet werden, das heißt, das Gerät benötigt keine Heiz- und/oder Kühleinrichtung und auch keine Fremdenergie, wie sie zum Beispiel für den zum Stand der Technik erläuterten Nacherhitzer oder Erhitzer benötigt werden würde. Auf Gerätekomponenten, wie den erwähnten Nacherhitzer beziehungsweise Erhitzer, kann daher verzichtet werden. Damit liegt ein einfach aufgebautes und damit preiswertes Gerät vor. Ferner wird - wie bereits erwähnt - ein Einfrieren der Wärmerückgewinnungseinrichtung ganzjährig sicher vermieden, das bedeutet, dass 100% der Zeit ein Lüftungs-/Klimatisierungsbetrieb ermöglicht ist. Die Zulufttemperatur wird ganzjährig - wie erläutert - zumindest auf Zuluftminimaltemperatur gehalten, das heißt, die Temperatur sinkt nicht unter die Zuluftminimaltemperatur, so dass ein thermischer Komfort - unabhängig von der Außentemperatur - gewährleistet ist. An extrem kalten Tagen wird der Außenluftstrom durch das erfindungsgemäße Vorgehen automatisch reduziert und damit Energie eingespart. Es wird ferner die maximal mögliche Energie an der Wärmerückgewinnungseinrichtung zurückgewonnen (begrenzt durch die Grenzwerte der Zuluftminimaltemperatur und der Fortluftminimaltemperatur). Demzufolge wird das Lüftungsgerät, das insbesondere als dezentrales Lüftungsgerät ausgebildet ist, ohne Nacherhitzer beziehungsweise Erhitzer betrieben. Es kann beispielsweise für 600 m³/h Außenluft ausgelegt sein. Die Wärmerückgewinnungseinrichtung kann insbesondere einen Rückwärmgrad von 83% aufweisen. Die Raumtemperatur beträgt ganzjährig 22°C, wobei - bei Bedarf - eine installierte Heizung im Raum mit aktiv ist. Die Heizung ist ein Raumbestandteil und gehört nicht dem lufttechnischen Gerät an. Die Zuluftminimaltemperatur bildet einen Grenzwert von beispielsweise 17°C; die Fortluftminimaltemperatur bildet einen Grenzwert von beispielsweise 2°C. Alle vorstehenden Werte sind beispielhaft, jedoch besonders bevorzugt. Es ist vorgesehen, dass die Querverbindung - zur Strömungsrichtung der Außenluft betrachtet - stromaufwärts zur Wärmerückgewinnungseinrichtung ausgebildet ist. Die Querverbindung verbindet demzufolge Außenluftkanal und Fortluftkanal.

Nach einer Weiterbildung der Erfindung ist vorgesehen, dass das Gerät - bis auf den gegebenenfalls erfolgenden Betrieb der Wärmerückgewinnungseinrichtung - keine thermische Behandlung der jeweiligen Luft vornimmt. Hierauf wurde vorstehend schon hingewiesen, das heißt, das Gerät arbeitet ohne Fremdenergie für das Heizen oder Kühlen, ist also heizeinrichtungsfrei, beispielsweise ohne den zum Stand der Technik erwähnten Nacherhitzer oder Erhitzer, wobei unter "ohne Fremdenergie für das Heizen oder Kühlen" beziehungsweise "heizeinrichtungsfrei" nicht die Funktion der Wärmerückgewinnungseinrichtung verstanden wird. Neben der Wärmerückgewinnungseinrichtung ist demzufolge keine weitere Einrichtung zum Heizen und/oder Kühlen im Gerät vorhanden.

Eine Weiterbildung der Erfindung sieht vor, dass im Raum zumindest zeitweise eine Raumheizung betrieben wird. Diese sorgt bei entsprechend niedrigen Außentemperaturen für eine hinreichende Temperierung des Raumes, wodurch ferner sichergestellt ist, dass die Abluft derart temperiert ist, dass ihre Wärmeenergie mittels der Wärmerückgewinnungseinrichtung der Außenluft im hinreichenden Maße zugeführt werden kann (kalte Jahreszeit). In der warmen Jahreszeit ist es auch möglich, dass warme Außenluft mittels der Wärmerückgewinnungseinrichtung durch die Abfuhr von in der Temperatur niedrigerer Abluft gekühlt wird und demzufolge mit niedrigerer Temperatur in den Raum eingebracht wird.

Nach einer Weiterbildung der Erfindung ist vorgesehen, dass das Einstellen der Verschlusseinrichtung und/oder der Verschlussvorrichtung gesteuert und/oder geregelt erfolgt/erfolgen. Insbesondere ist vorgesehen, dass der ganzjährige Betrieb des lufttechnischen Geräts mittels einer entsprechenden Regeleinrichtung automatisch durchgeführt wird. Demzufolge werden die Verschlusseinrichtung und die Verschlussvorrichtung stufenlos im Regelbetrieb gefahren, wobei einzuhaltende Parameter, wie die vorgebbare Zuluftminimaltemperatur und die vorgebbare Fortluftminimaltemperatur durch Regelung eingehalten werden. Um entsprechende Luftströme im Gerät zu führen, ist mindestens eine Luftstromfördereinrichtung vorgesehen, die vorzugsweise ebenfalls gesteuert und/oder geregelt arbeitet. Die erwähnte Regeleinrichtung kann in einem bevorzugten Ausführungsbeispiel die Größe des von der Luftfördereinrichtung geförderten Volumenstroms regeln. Vorzugsweise sind zwei Luftfördereinrichtungen vorgesehen, wobei jedem Luftkanal eine zugeordnet ist. Beide Luftfördereinrichtungen werden vorzugsweise mittels der Regeleinrichtung geregelt, die auch die Verschlusseinrichtung und die Verschlussvorrichtung regelt.

Die Erfindung sieht vor, dass mittels an der Steuer- und/oder Regeleinrichtung angeschlossenen Sensoren die Temperatur der Zuluft und die Temperatur der Abluft ermittelt und in Abhängigkeit der ermittelten Temperaturen die Verschlusseinrichtung und/oder die Verschlussvorrichtung eingestellt wird/werden. Dies wird mittels der erwähnten Regeleinrichtung vorgenommen. Die Zuluftminimaltemperatur und/oder die Fortluftminimaltemperatur stellt jeweils im Falle eines Regelvorgangs einen Sollwert dar, auf den der jeweilig zugehörige Istwert geregelt beziehungsweise begrenzt wird.

Eine Weiterbildung der Erfindung sieht vor, dass der Bypass als Zuluftbypass und/oder als Abluftbypass wirkend verwendet wird. Beide Bypässe, die alternativ oder auch beide zusammen vorgesehen sein können, dienen dazu, die Wärmerückgewinnungseinrichtung nicht, teilweise oder ganz zu umgehen. Die Anordnung ist derart getroffen, dass ein Abschnitt des ersten Luftkanals einen Außenluftkanal bis zur Wärmerückgewinnungseinrichtung bildet und dass - von der Wärmerückgewinnungseinrichtung ausgehend - ein weiterer Abschnitt des ersten Luftkanals einen Zuluftkanal bildet, der Luft in den Raum einbringt. Ein Abschnitt des zweiten Luftkanals bildet einen Abluftkanal, der Raumluft aus dem Raum abführt und bis zur Wärmerückgewinnungseinrichtung leitet. Ab der Wärmerückgewinnungseinrichtung bildet ein Abschnitt des zweiten Luftkanals einen Fortluftkanal, der Luft in die Außenumgebung ableitet. Sofern ein Umluftbetrieb gefahren wird, bilden entsprechende, vom Raum ausgehende, bis zur Querverbindung führende Abschnitte der beiden Luftkanäle Umluftkanäle. Die Ausbildung des Bypasses als Zuluftbypass sieht vor, dass dieser den Außenluftkanal mit dem Zuluftkanal verbindet. Die Ausbildung des Bypasses als Abluftbypass sieht vor, dass dieser den Abluftkanal mit dem Fortluftkanal verbindet.

Nach einer Weiterbildung der Erfindung ist vorgesehen, dass die Zuluftminimaltemperatur im Bereich von 15°C bis 21°C liegt, insbesondere etwa 17°C beträgt. Für die Fortluftminimaltemperatur ist vorzugsweise ein Wert > 0°C, insbesondere etwa 2°C vorgesehen.

Die Erfindung betrifft ferner ein lufttechnisches Gerät nach Anspruch 11 zum Klimatisieren eines Raumes eines Gebäudes oder dergleichen, mit einem ersten und einem zweiten Luftkanal, einer Querverbindung zwischen den Luftkanälen, einer Wärmerückgewinnungseinrichtung, einer Verschlusseinrichtung, einem Bypass, einer Verschlussvorrichtung und einer das Einstellen der Verschlusseinrichtung und/oder der Verschlussvorrichtung vornehmenden Steuer- und/oder Regeleinrichtung und Sensoren zur Temperaturermittlung, zur Durchführung des vorstehenden Verfahrens.

Ferner betrifft die Erfindung einen Raum eines Gebäudes oder dergleichen, mit einem vorstehend erläuterten lufttechnischen Gerät.

Vorzugsweise ist - nach einer Weiterbildung des die Erfindung betreffenden Raums - vorgesehen, dass der Raum mindestens eine Raumheizung aufweist.

Die Zeichnungen veranschaulichen die Erfindung anhand von Ausführungsbeispielen, und zwar zeigt:
- Figur 1: eine schematische Längsschnittansicht durch ein lufttechnisches Gerät,
- Figur 2: das lufttechnische Gerät der Figur 1 in einem ersten Betriebszustand,
- Figur 3: das lufttechnische Gerät der Figur 1 in einem zweiten Betriebszustand,
- Figur 4: das lufttechnische Gerät der Figur 1 in einem dritten Betriebszustand,
- Figur 5: das lufttechnische Gerät der Figur 1 in einem vierten Betriebszustand,
- Figur 6: ein weiteres Ausführungsbeispiel eines lufttechnischen Geräts,
- Figur 7: ein weiteres Ausführungsbeispiel eines lufttechnischen Geräts,
- Figur 8 bis 12: Diagramme zur Arbeitsweise des lufttechnischen Geräts der Figur 1.

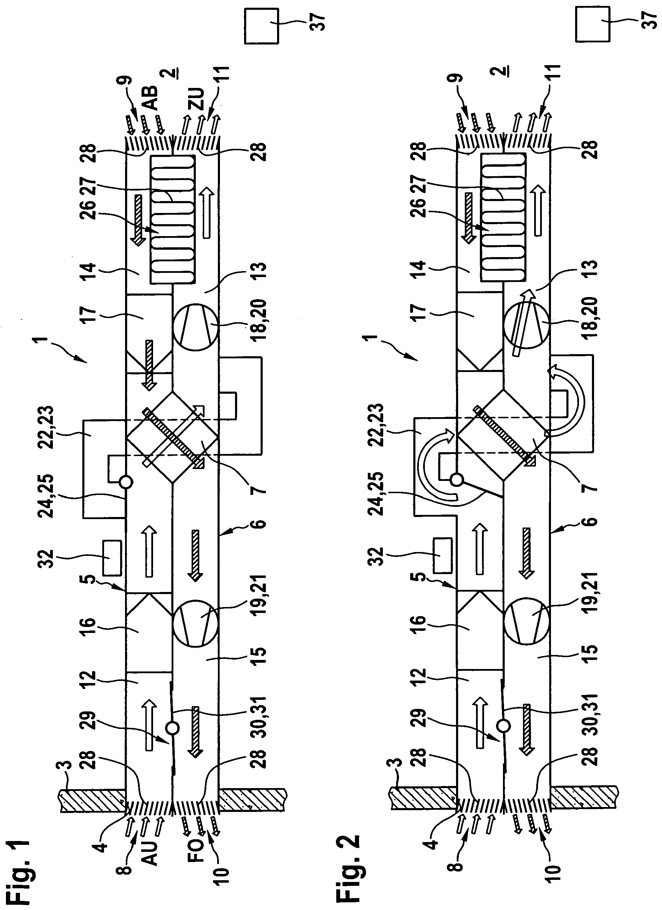

Die Figur 1 zeigt ein lufttechnisches Gerät 1, das sich in einem Raum 2 eines Gebäudes oder dergleichen befindet. Eine Fassade 3 des Raumes 2 weist eine Öffnung 4 auf, an die das raumlufttechnische Gerät 1 angeschlossen ist beziehungsweise die von dem raumlufttechnischen Gerät 1 mit einem Endbereich durchsetzt wird.

Das lufttechnische Gerät 1 weist innerhalb eines nicht näher dargestellten Gehäuses einen ersten Luftkanal 5 sowie einen zweiten Luftkanal 6 auf. Beiden Luftkanälen 5 und 6 ist eine Wärmerückgewinnungseinrichtung 7 zugeordnet. Der erste Luftkanal 5 weist eine Außenluftöffnung 8 sowie eine Zuluftöffnung 11 auf. Der zweite Luftkanal 6 weist eine Abluftöffnung 9 sowie eine Fortluftöffnung 10 auf. Aus der Figur 1 ist erkennbar, dass insofern der erste Luftkanal von der Außenluftöffnung 8 bis zur Wärmerückgewinnungseinrichtung 7 führt und von dort - versetzt - von der Wärmerückgewinnungseinrichtung 7 bis zur Zuluftöffnung 11. Dementsprechend führt der zweite Luftkanal 6 von der Abluftöffnung 9 bis zur Wärmerückgewinnungseinrichtung 7 und - versetzt - von der Wärmerückgewinnungseinrichtung 7 bis zur Fortluftöffnung 10. Außenluftöffnung 8 und Fortluftöffnung 10 liegen außerhalb des Raumes 2 und führen an die Außenatmosphäre. Die Abluftöffnung 9 und die Zuluftöffnung 10 liegen innerhalb des Raumes 2. Die Wärmerückgewinnungseinrichtung 7 führt Luftströme der Luftkanäle 5 und 6 derart, dass diese sich vorzugsweise kreuzen oder vorzugsweise eine Gegenstromsituation vorliegt und dabei ein Wärmeübergang stattfindet. Strömungstechnisch sind die beiden Luftkanäle 5 und 6 voneinander getrennt. Ein Abschnitt des ersten Luftkanals zwischen der Außenluftöffnung 8 und der Wärmerückgewinnungseinrichtung 7 bildet einen Außenluftkanal 12. Ein weiterer Abschnitt des ersten Luftkanals 5 zwischen der Wärmerückgewinnungseinrichtung 7 und der Zuluftöffnung 11 bildet einen Zuluftkanal 13. Ein Abschnitt des zweiten Luftkanals 6 zwischen der Abluftöffnung 9 und der Wärmerückgewinnungseinrichtung 7 bildet einen Abluftkanal 14 und ein weiterer Abschnitt des zweiten Luftkanals 6 zwischen der Wärmerückgewinnungseinrichtung 7 und der Fortluftöffnung 10 bildet einen Fortluftkanal 15. Im Außenluftkanal 12 kann sich zwischen der Außenluftöffnung 8 und der Wärmerückgewinnungseinrichtung 7 ein Luftfilter 16 befinden (optional). Ferner kann sich im Abluftkanal 14 - ebenfalls optional - zwischen der Abluftöffnung 9 und der Wärmerückgewinnungseinrichtung 7 ein Luftfilter 17 befinden. Im ersten Luftkanal 5 ist eine Luftfördereinrichtung 18 und im zweiten Luftkanal 6 eine Luftfördereinrichtung 19 angeordnet. Beide Luftfördereinrichtungen 18, 19 sind vorzugsweise als Ventilatoren 20, 21 ausgebildet. Bevorzugt befindet sich die Luftfördereinrichtung 18 im Zuluftkanal 13 und die Luftfördereinrichtung 19 im Fortluftkanal 15.

Mittels eines Bypasses 22, der als Zuluftbypass 23 ausgebildet ist, lässt sich die Wärmerückgewinnungseinrichtung 7 strömungstechnisch von der Außenluft umgehen. Der Zuluftbypass 23 führt demzufolge vom Außenluftkanal 12 zum Zuluftkanal 13. Er lässt sich mittels einer einstellbaren Verschlussvorrichtung 24 verschließen oder ganz oder teilweise öffnen. Die Verschlussvorrichtung 24 ist vorzugsweise als Luftklappe 25 ausgebildet, die in der aus der Figur 1 hervorgehenden Stellung den Bypass 22 verschließt. Optional befindet sich im Zuluftkanal 13 und im Abluftkanal 14 ein Schalldämpfer 26, dessen Kulisse 27 für beide Luftkanäle 5 und 6 wirksam ist. Außenluftöffnung 8, Abluftöffnung 9, Fortluftöffnung 10 und Zuluftöffnung 11 weisen Luftleitelemente 28 auf, die insbesondere Kurzschlussluftströme vermeiden, also ein Überströmen von Luft aus der Zuluftöffnung 11 in die Abluftöffnung 9 beziehungsweise von der Fortluftöffnung 10 in die Außenluftöffnung 8.

Der erste Luftkanal 5 ist mit dem zweiten Luftkanal 6 über eine Querverbindung 29 verbunden, die mittels einer einstellbaren Verschlusseinrichtung 30 verschließbar oder teilweise oder ganz zu öffnen ist. Die Verschlusseinrichtung 30 ist als Doppelluftklappe 31 ausgebildet. Die Querverbindung 29 befindet sich vorzugsweise in einem Abschnitt des Außenluftkanals 12, der von der Außenluftöffnung 8 bis zum Luftfilter 16 beziehungsweise - wenn kein Luftfilter 16 vorhanden ist - bis zur Verschlussvorrichtung 24 führt. Dementsprechend liegt die Querverbindung 29 im Fortluftkanal 15 zwischen Fortluftöffnung 10 und Luftfördereinrichtung 19 beziehungsweise - wenn dort keine Luftfördereinrichtung 19 angeordnet ist - zwischen Fortluftöffnung 10 und Wärmerückgewinnungseinrichtung 7.

Grundsätzlich ergibt sich folgende Funktion: Außenluft AU wird von der Luftfördereinrichtung 18 angesaugt, sodass sie in die Außenluftöffnung 8 eintritt, den möglicherweise vorhandenen Luftfilter 16 durchströmt, die Wärmerückgewinnungseinrichtung 7 durchsetzt und nach Passieren des Schalldämpfers 26 aus der Zuluftöffnung 11 als Zuluft ZU in den Raum 2 eintritt. Mittels der Luftfördereinrichtung 19 wird Raumluft als Abluft AB aus dem Raum 2 angesaugt, die die Abluftöffnung 9 passiert, sich am Schalldämpfer 26 entlang bewegt, optional den Luftfilter 17 durchsetzt, dann durch die Wärmerückgewinnungseinrichtung 7 mit einem Wärmetausch mit der entsprechenden Luft des ersten Luftkanals 5 hindurchtritt und nach Passieren des Fortluftkanals 15 aus der Fortluftöffnung 10 als Fortluft FO nach außen austritt. Weist die Verschlussvorrichtung 24 nicht die aus der Figur 1 hervorgehende Geschlossenstellung auf, sondern wird der Bypass 22 zumindest teilweise geöffnet, so wird im entsprechenden Maße die Wärmerückgewinnungseinrichtung 7 umgangen.

In der Figur 1 weist die Verschlusseinrichtung 30 eine die Querverbindung 29 verschließende Stellung auf. Wird die Verschlusseinrichtung 30 teilweise geöffnet, kann weiterhin Außenluft AU im entsprechenden Umfang den Außenluftkanal 12 und Fortluft FO im entsprechenden Umfang den Fortluftkanal 15 passieren, jedoch tritt auch Fortluft FO durch die entsprechend geöffnete Querverbindung 29 in den Außenluftkanal 12 ein, sodass sich eine Vermischung mit der dort strömenden Außenluft AU ergibt. Wird die Querverbindung 29 ganz geöffnet, so weist die Verschlusseinrichtung 30 eine Stellung auf, die den Außenluftkanal 12 und den Fortluftkanal 15 vollständig nach außen verschließen. Die Verschlussvorrichtung 24 kann aus ihrer aus der Figur 1 hervorgehenden Schließstellung derart weit verlagert werden, dass sie den Bypass 22 vollständig öffnet, wobei sie dann derart weit in den Außenluftkanal 12 eingetreten ist, dass sie diesen komplett verschließt.

Gemäß Figur 1 weist das raumlufttechnische Gerät 1 eine nur schematisch angedeutete Regeleinrichtung 32 auf, mit der die Stellungen der Verschlussvorrichtung 24 und der Verschlusseinrichtung 30 geregelt werden. Diese Regelung erfolgt in Abhängigkeit verschiedener Parameter des raumlufttechnischen Geräts 1, insbesondere in Abhängigkeit einer Zuluftminimaltemperatur T_{ZU SOLL} und einer Fortluftminimaltemperatur T_{FO GRENZ}, d.h., diese Minimaltemperaturen sollen von der Zuluft ZU und von der Fortluft FO nicht unterschritten werden. Es kann vorgesehen sein, dass die Regeleinrichtung 32 auch die von den Luftfördereinrichtungen 18 und/oder 19 geförderten Luftströme im Volumenstrom regelt. Die Anordnung ist vorzugsweise derart getroffen, dass beide Luftfördereinrichtungen 18 und 19 einen gleichgroßen Volumenstrom fördern, um keinen Über- oder Unterdruck im Raum 2 zu schaffen.

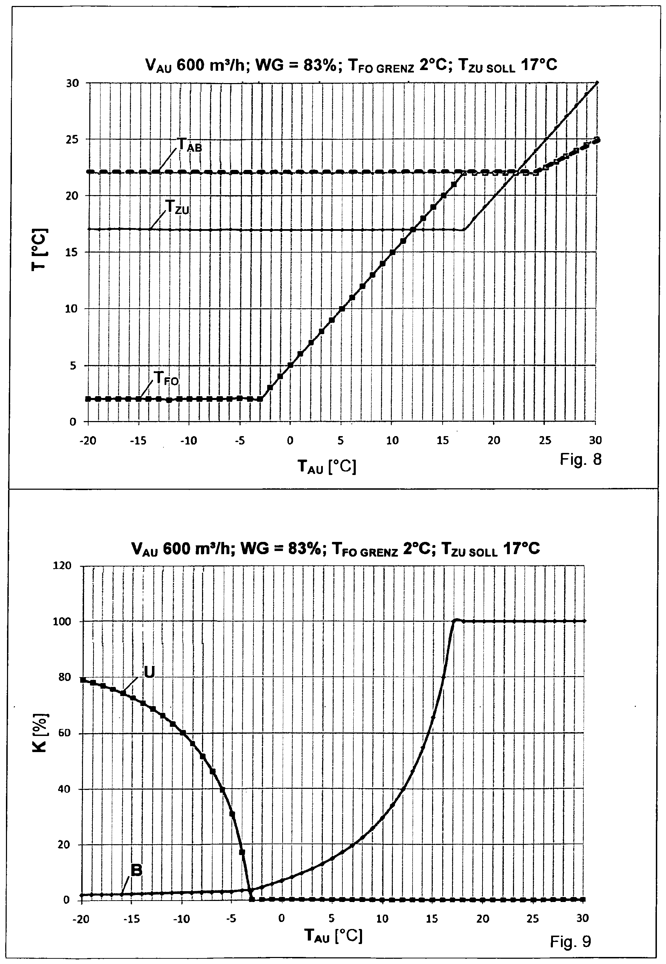

Die erfindungsgemäße Vorgehensweise der Betriebsführung des raumlufttechnischen Geräts 1 wird nachstehend anhand der Figuren 2 bis 5 näher erläutert. Zunächst wird die Betriebsführung insbesondere im Sommer, also bei hinreichend hohen Außentemperaturen, die insbesondere größer als T_{ZU SOLL} sind, betrachtet. Im hier vorliegenden Ausführungsbeispiel soll T_{ZU SOLL} beispielsweise den Wert 17°C betragen, d.h., die Regeleinrichtung 32 ist bestrebt, die Zuluft ZU mit mindestens 17°C in den Raum 2 einzubringen. Liegen diese vorstehend genannten warmen Außentemperaturen vor, so wird - gemäß Figur 2 - der Zuluftbypass 23 vollständig geöffnet und die Verbindung des Außenluftkanals 12 zur Wärmerückgewinnungseinrichtung 7 geschlossen. Durch das Umfahren der Wärmerückgewinnungseinrichtung 7 gelangt Außenluft AU in den Raum, wobei die Zulufttemperatur T_{ZU} gleichgroß wie die Außenlufttemperatur T_{AU} ist. Die Verschlusseinrichtung 30 verschließt die Querverbindung 29 vollständig, sodass in den Raum 100% Außenluft und 0% Umluft gelangt. In einer weiteren Ausführungsform kann selbstverständlich auch vorgesehen sein, dass die Wärmerückgewinnungseinrichtung 7 auch im Sommer bei warmen Außentemperaturen, insbesondere bei extrem hohen Außentemperaturen, genutzt wird, d.h., der Bypass 22 wird mittels der Verschlussvorrichtung 24 geschlossen oder teilweise geschlossen und es erfolgt ein Wärmetausch, d.h., die kühlere Abluft AB kühlt mittels der Wärmerückgewinnungseinrichtung 7 die wärmere Außenluft AU herunter. Da jedoch oftmals nur eine geringe Temperaturdifferenz zwischen der Temperatur T_{AU} der Außenluft und der Temperatur T_{AB} der Abluft vorliegt, ergibt sich gegenüber dem energetischen Gewinn des Wärmetauschs ein erhöhter Energieverbrauch durch den Druckverlust der betriebenen Wärmerückgewinnungseinrichtung 7, sodass der Einsatz der Wärmerückgewinnungseinrichtung 7 stets abzuwägen ist. In dem Regelungsbeispiel der Diagramme der Figuren 8-12 liegt dieses Regelverhalten bei Außentemperaturen T_{AU} > 17°C vor.

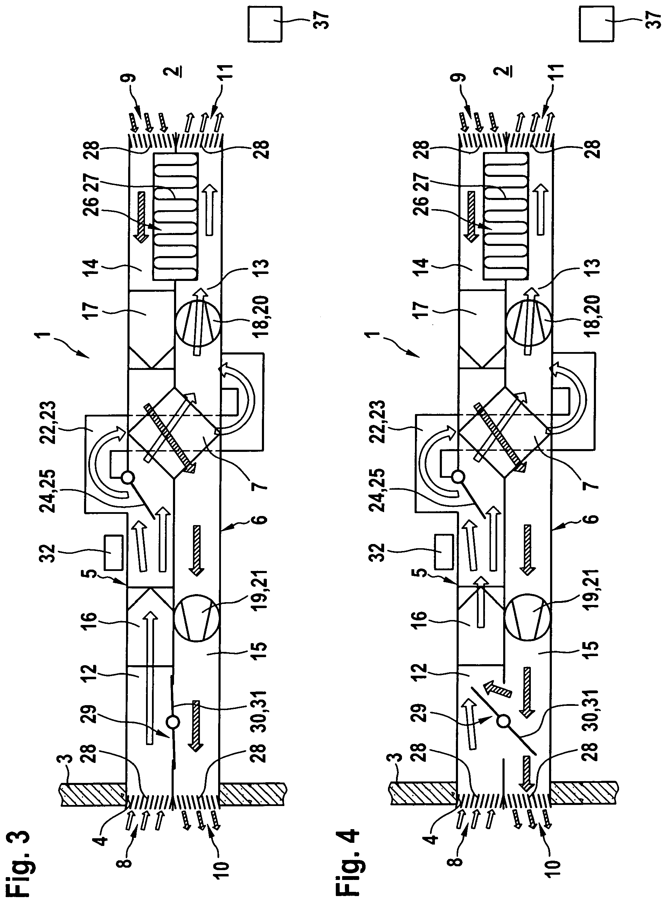

Unterschreitet die Temperatur T_{AU} der Außenluft die vorgebbare Zuluftminimaltemperatur T_{ZU SOLL} (zum Beispiel 17°C), so beginnt die Verschlussvorrichtung 24 zu schließen, wobei der Grad des Schließens von der Regeleinrichtung 32 bestimmt wird. Es sei in diesem Zusammenhang noch erwähnt, dass die Regeleinrichtung über Temperatursensoren verfügt, um insbesondere die Temperatur der Zuluft ZU und die Temperatur der Fortluft FO zu bestimmen. Durch das teilweise Schließen der Verschlussvorrichtung 24 - so wie es sich aus der Figur 3 ergibt - entnimmt der Anteil der Außenluft AU, der durch die Wärmerückgewinnungseinrichtung 7 strömt, der ebenfalls durch die Wärmerückgewinnungseinrichtung 7 strömenden Abluft AB Wärme, d.h., durch diese Wärme wird die zugeführte Außenluft AU erwärmt, sodass die Zuluft ZU, die nach der Wärmerückgewinnungseinrichtung 7 aus der Zuluftöffnung 11 in den Raum 2 strömt, entsprechend erwärmt wird. Hierbei ist zu beachten, dass sich die in den Raum 2 gelangende Zuluft ZU aus zwei Teilvolumenströmen zusammmenmischt, nämlich den Volumenstrom, der die Wärmerückgewinnungseinrichtung 7 passiert und dem Volumenstrom, der durch den Bypass 22 strömt. Die Regeleinrichtung 32 sorgt dafür, dass sich die Zuluft ZU auf T_{ZU SOLL}, also 17°C, erwärmt und mit dieser Temperatur in den Raum 2 eintritt. Wie der Figur 3 zu entnehmen ist, befindet sich die Verschlusseinrichtung 30 immer noch in ihrer die Querverbindung 29 komplett verschließenden Stellung, sodass 100% Außenluft und 0% Umluft gewährleistet ist. Diese vorstehend erwähnte Regelstrategie wird über einen weitreichenden Temperaturbereich der Außenluft AU zielführend von der Regeleinrichtung 32 durchgeführt. Bei einem entsprechend hohen Rückwärmgrad der Wärmerückgewinnungseinrichtung 7 kann diese Regelstrategie mit dem Ergebnis, dass T_{ZU SOLL} den gewünschten Wert, zum Beispiel 17°C, nicht unterschreitet, selbst bei Minusgraden der Außenluft AU aufrechterhalten bleiben. In dem Regelungsbeispiel der Diagramme der Figuren 8-12 liegt dieses Regelverhalten im Bereich der Außentemperaturen von - 3°C < T_{AU} < 17°C vor.

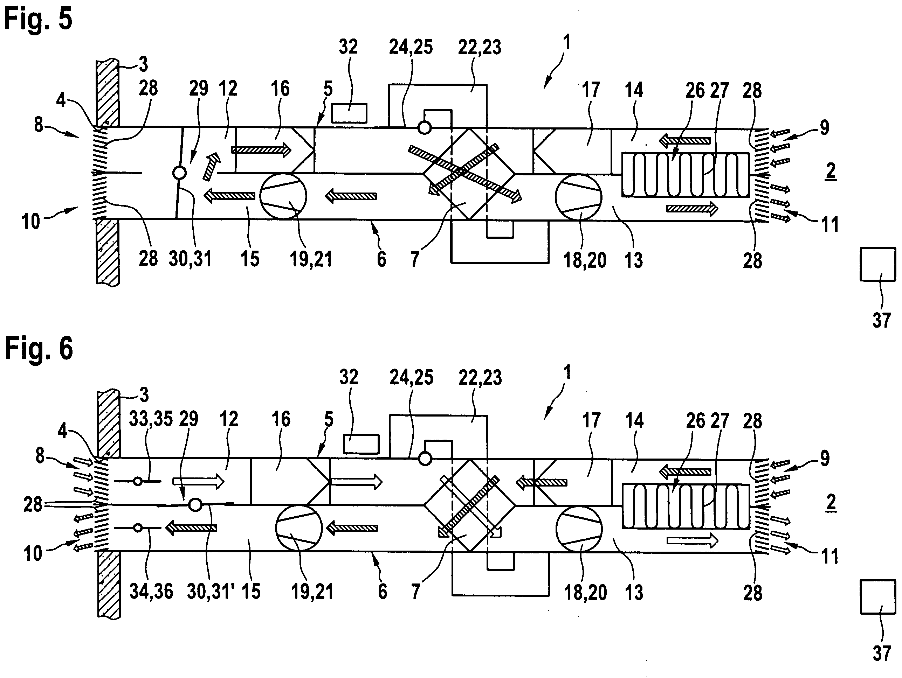

Erreicht die Fortlufttemperatur T_{FO} nach dem Durchströmen der Wärmerückgewinnungseinrichtung 7 bei noch weiter sinkenden Außentemperaturen T_{AU} den kritischen Grenzwert T_{FO GRENZ} von hier angenommenen 2°C, so beginnt - gemäß Figur 4 - die Verschlusseinrichtung 30 einen Anteil der Fortluft FO der Außenluft AU beizumischen, sodass die Beziehung T_{FO} = T_{FO GRENZ} erhalten bleibt. Zugleich wird die Verschlussvorrichtung 24 derart geregelt, dass T_{ZU SOLL} nicht unterschritten wird. Die aus der Stellung der Verschlussvorrichtung 30 resultierende Reduzierung der Leistung der Wärmerückgewinnungseinrichtung 7 wird - sofern der Bypass 22 nicht komplett geschlossen ist - von der Stellung der Verschlusseinrichtung 30 kompensiert. Die Figur 5 zeigt eine erreichte Grenzregelstellung, d.h., hier ist nur noch ein Umluftbetrieb gegeben, wobei die Wärmerückgewinnungseinrichtung 7 zu 100% im Einsatz ist, da der Bypass 22 geschlossen ist. Die Verschlusseinrichtung 30 hat eine Stellung eingenommen, in der die Querverbindung 29 vollständig geöffnet ist und sowohl der Außenluftkanal 12 als auch der Fortluftkanal 15 vollständig nach außen geschlossen sind.

Bei jedem der vorstehend erwähnten Regelbereiche mit entsprechenden Stellungen der Verschlussvorrichtung 24 und der Verschlusseinrichtung 30 ergibt sich stets ein stabiler Regelzustand, sodass ganzjährig gewährleistet ist, dass die Zuluft ZU die vorgebbare Zuluftminimaltemperatur T_{ZU SOLL} nicht unterschreitet und dass die Temperatur der Fortluft FO die vorgebbare Fortluftminimaltemperatur T_{FO GRENZ} nicht unterschreitet. Bei den beispielhaft angenommenen Werten von T_{ZU SOLL} = 17°C ist ein angenehmer Komfort in der Aufenthaltszone des Raumes 2 gegeben. Die Fortluftminimaltemperatur T_{FO GRENZ} mit 2°C stellt sicher, dass es nicht zu einem Einfrieren der Wärmerückgewinnungseinrichtung 7 kommt. Das erläuterte Regelverfahren erfolgt kontinuierlich durchgeführt, d.h., die entsprechenden Parameter werden kontinuierlich den Erfordernissen entsprechend angepasst. Durch das erfindungsgemäße Regelverfahren wird der Außenluftvolumenstrom bei extrem kalten Außenluftbedingungen entsprechend weit reduziert, wobei dennoch ein ganzjähriger Lüftungs-/Klimatisierungsbetrieb bei hinreichenden Zulufttemperaturen ermöglicht ist. Die Reduzierung des Außenluftvolumenstroms bei extremen Außentemperaturen entspricht hierbei einem natürlichen Nutzerverhalten bei Fensterlüftung und begrenzt den Lüftungswärmebedarf und hilft demnach eine installierte Spitzenheizleistung entsprechend reduziert vorzunehmen. In dem Regelungsbeispiel der Diagramme der Figuren 8-12 liegt dieses Regelverhalten bei Außentemperaturen T_{AU} < - 3°C vor.

Bei allen Ausführungsbeispielen ist stets sichergestellt, dass der Raum 2 eine Raumheizung 37 aufweist. Diese gehört nicht zum lufttechnischen Gerät 1 und wird in Abhängigkeit von der Raumlufttemperatur betrieben. Die Regeleinrichtung 32 wirkt nicht auf die Raumheizung ein. Alternativ ist jedoch ein Einwirken möglich. Insbesondere ist vorgesehen, dass stets eine Raumtemperatur von 22°C vorliegt.

Insgesamt ergeben sich aufgrund der Erfindung folgende Vorteile: Durch die entsprechende Steuerung/Regelung der Einrichtungen des lufttechnischen Geräts 1 kann auf eine geräteinterne Erhitzung/Nacherhitzung ganzjährig verzichtet werden. Ein Einfrieren der Wärmerückgewinnungseinrichtung 7 ist ganzjährig sicher vermieden. Die Zulufttemperatur kann ganzjährig auf T_{ZU SOLL} nach unten begrenzt werden, d.h., ein thermischer Komfort ist gewährleistet unabhängig von der jeweiligen Außentemperatur. An extrem kalten Tagen wird der Außenluftstrom automatisch reduziert und damit Energie gespart. Es wird zeitgleich die maximal mögliche Energie an der Wärmerückgewinnungseinrichtung 7 zurückgewonnen (begrenzt durch die Grenzwerte T_{FO GRENZ} und T_{ZU SOLL}).

Die Figur 6 betrifft ein weiteres Ausführungsbeispiel eines raumlufttechnischen Geräts 1, dass sich von dem Ausführungsbeispiel der Figur 1 nur dadurch unterscheidet, dass die Verschlusseinrichtung 30 nicht von einer einzigen Doppelluftklappe 31 gebildet ist, sondern dass die Doppelluftklappe 31' der Verschlusseinrichtung 30 nur zum Öffnen und Schließen der Querverbindung 29 vorgesehen ist, jedoch den Außenluftkanal 12 und den Fortluftkanal 15 nicht vollständig verschließen kann. Zum Verschließen des Außenluftkanals 12 beziehungsweise des Fortluftkanals 15 sind separate Verschlusseinrichtungen 33 und 34 vorgesehen, die vorzugsweise ebenfalls als Doppelluftklappen 35 und 36 ausgebildet sind. Ansonsten gilt die Beschreibung zum Ausführungsbeispiel der Figuren 1-5 bei dem Ausführungsbeispiel der Figur 6 entsprechend.

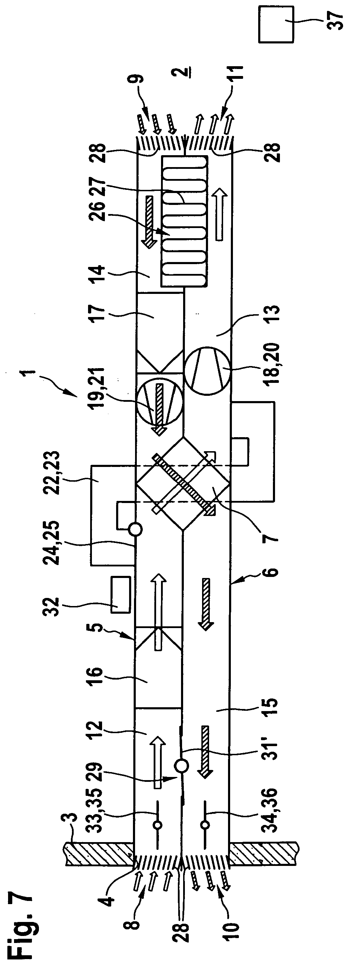

Beim Ausführungsbeispiel der Figur 7 ist gegenüber dem Ausführungsbeispiel der Figur 6 vorgesehen, die Luftfördereinrichtung 19 nicht im Fortluftkanal 15, sondern im Abluftkanal 14 unterzubringen. Ansonsten gilt die Beschreibung entsprechend wie beim Ausführungsbeispiel der Figur 6 beziehungsweise Figuren 1-5.

Die Figuren 8 bis 12 zeigen verschiedene Diagramme, wobei auf der Abszisse jeweils die Temperatur T_{AU} der Außenluft im Bereich von - 20°C bis + 30°C aufgetragen ist. Die Diagramme der Figuren 8 bis 12 gelten für ein Außenluftvolumenstrom V_{AU} = 600m³/h, einem Rückwärmgrad der Wärmerückgewinnungseinrichtung 7 von WG = 83%, einer Fortluftminimaltemperatur T_{FO GRENZ} von 2°C und einer Zuluftminimaltemperatur T_{ZU SOLL} = 17°C.

Die Figur 8 zeigt auf der Ordinate die Temperatur in °C, wobei verschiedene Kennlinien die Temperatur der Abluft T_{AB}, die Temperatur der Zuluft T_{ZU} und die Temperatur der Fortluft T_{FO} verdeutlichen. Für die Temperatur der Fortluft T_{FO} gilt für eine Außenlufttemperatur T_{AU} unter - 3°C, dass das raumlufttechnische Gerät 1 die Temperatur der Fortluft sicher auf + 2°C hält, um das Einfrieren der Wärmerückgewinnungseinrichtung 7 zu vermeiden. Für den Temperaturverlauf (T_{ZU}) der Zuluft gilt, dass unter einer Außenlufttemperatur von 17°C die das raumlufttechnische Gerät 1 die Zulufttemperatur T_{ZU} sicher auf 17°C regelt. Für die Temperatur T_{AB} der Abluft gilt ein Wert von 22°C, der durch die Heizung im Raum 2 (Raumheizung 37) bereitgestellt wird. Ab einer Außenlufttemperatur T_{AU} = 24°C steigt die Raumtemperatur an.

Das Diagramm der Figur 9 weist auf der Ordinate die Klappenstellung K in % auf, wobei hier die Luftklappen der Verschlussvorrichtung 24 und der Verschlusseinrichtung 30 gemeint sind. Die Verschlussvorrichtung 24 ist dem Bypass 22 zugeordnet und im Diagramm mit B (Bypassklappe) gekennzeichnet. Die Verschlusseinrichtung 30 ermöglicht einen Umluftbetrieb, sodass im Diagramm der Figur 9 ein U für Umluftklappe verwendet ist. Es ist erkennbar, dass unter einer Außentemperatur T_{AU} = - 3°C das raumlufttechnische Gerät die Fortlufttemperatur T_{FO} sicher auf + 2°C hält, um das Einfrieren der Wärmerückgewinnungseinrichtung 7 zu vermeiden. Zeitgleich dazu wird die Zulufttemperatur T_{ZU} mit 17°C erhalten, ohne dass eine Heizeinrichtung mit Fremdenergie im lufttechnischen Gerät 1 vorhanden ist. Bypassklappe und Umluftklappe werden entsprechend von der Regeleinrichtung 32 gesteuert. Unter T_{AU} = 17°C regelt das raumlufttechnische Gerät 1 die Temperatur der Zuluft T_{ZU} sicher auf 17°C mit der Bypassklappe B.

Um den Außenluftstrom bei niedrigen Temperaturen (< - 3°C) weiter zu gewährleisten, können in einer Weiterführung der Regelung die Ventilatorvolumenströme angehoben werden.

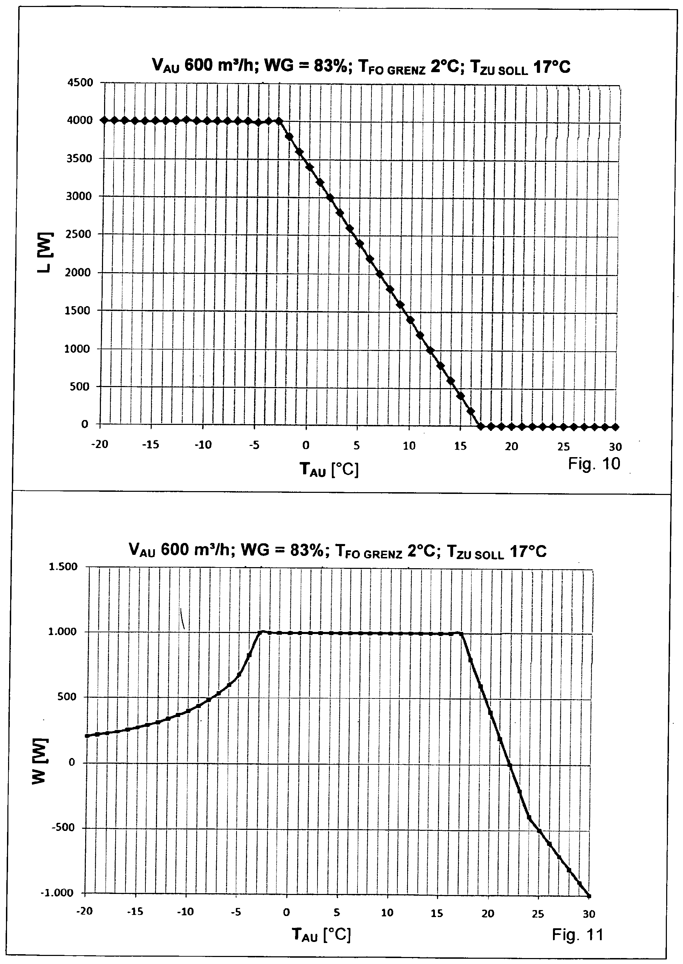

Die Figur 10 zeigt auf der Ordinate eine Leistung, nämlich die Leistung der Wärmerückgewinnungseinrichtung 7. Es ist erkennbar, dass unter einer Außenlufttemperatur T_{AU} = - 3°C die Temperatur der Fortluft T_{FO} und die Temperatur der Zuluft T_{ZU} sicher geregelt werden. Dies bedeutet bei einem Volumenstrom der Außenluft AU von 600m³/h, dass die Leistung der Wärmerückgewinnungseinrichtung 7 etwa 4kW beträgt. Ferner ist erkennbar, dass unter einer Außenlufttemperatur T_{AU} = 17°C die Verschlussvorrichtung 24 so verstellt wird, dass die Wärmerückgewinnungseinrichtung 7 genutzt wird.

Das Diagramm der Figur 11 zeigt auf der Ordinate den Wärmebedarf im Raum 2. Es ist erkennbar, dass unter T_{AU} = - 3°C der Lüftungswärmebedarf durch eine Reduzierung des Volumenstroms geringer wird. Unter einer Außenlufttemperatur T_{AU} = 17°C wird die Temperatur der Zuluft begrenzt, d.h., es liegt ein konstanter Lüftungswärmeverlust von 1kW vor, der durch die Personenlasten von sich im Raum 2 befindlichen Personen kompensiert wird. Schließlich ist für Außenlufttemperaturen T_{AU} gleich 22°C erkennbar, dass isotherm in den Raum 2 eingeblasen wird, d.h., es liegt ein Lüftungswärmeverlust von 0 vor. Bei steigender Außenlufttemperatur T_{AU} ergibt sich der Kühlfall.

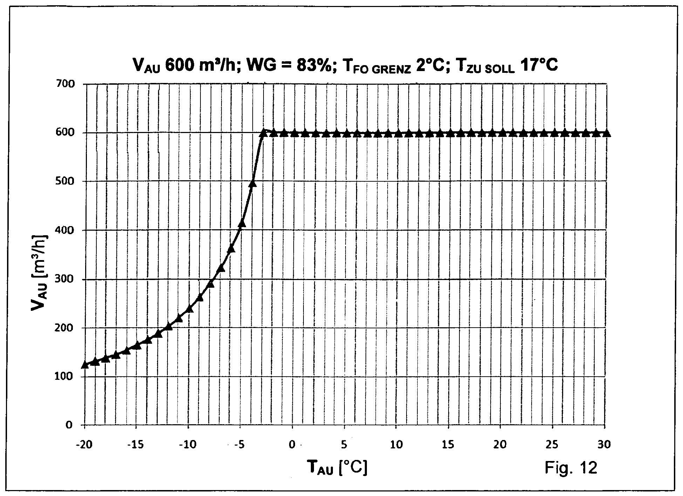

Letztlich zeigt das Diagramm der Figur 12 auf der Ordinate den Außenluftvolumenstrom, wobei durch den Kurvenverlauf erkennbar ist, dass bei Außentemperaturen von - 10°C beispielsweise 240m³/h zur Verfügung stehen. Unter einer Außentemperatur von - 3°C wird durch die Verschlusseinrichtung 30 der resultierende Außenluftvolumenstrom in den Raum 2 von 600m³/h kontinuierlich reduziert. Hierdurch wird der Lüftungswärmebedarf an extrem kalten Tagen vermindert.

Optional könnte auch eine Regelung des Zuluftvolumenstroms nach dem CO₂-Gehalt der Luft in der Aufenthaltszone des Raumes 2 erfolgen, um den Lüftungswärmebedarf und somit die Heizkosten im Winter zu minimieren.

## Patentansprüche

1. Verfahren zum Betreiben eines lufttechnischen Geräts (1) zum Klimatisieren eines Raumes (2) eines Gebäudes oder dergleichen, wobei Zuluft (ZU) mit Temperaturen in den Raum (2) eingebracht wird, die eine vorgebbare Zuluftminimaltemperatur (T_{ZU SOLL}) nicht unterschreiten, das Gerät (1) einen ersten und einen zweiten Luftkanal (5,6) zum Führen von Außenluft (AU), Zuluft (ZU), Abluft (AB), Fortluft (FO) und/oder Umluft aufweist, die Luftkanäle (5,6) eine Querverbindung (29) besitzen sowie wärmetechnisch mittels einer Wärmerückgewinnungseinrichtung (7) koppelbar sind und mittels mindestens einer einstellbaren Verschlusseinrichtung (30) verschließbar oder teilweise oder ganz zu öffnen sind und dabei die Querverbindung (29) ganz geöffnet oder teilweise oder ganz geschlossen wird, und ein die Wärmerückgewinnungseinrichtung (7) umgehender Bypass (22) vorgesehen ist, der mittels einer einstellbaren Verschlussvorrichtung (24) verschließbar oder ganz oder teilweise zu öffnen ist, wobei die Querverbindung (29) - zur Strömungsrichtung der Außenluft (AU) betrachtet - stromaufwärts zur Wärmerückgewinnungseinrichtung (7) ausgebildet ist, **dadurch gekennzeichnet, dass** - ausgehend von ganz geöffneten Luftkanälen (5,6) und geschlossener Querverbindung (29) sowie ganz geöffnetem Bypass (22) - bei abnehmenden Außenlufttemperaturen folgende Maßnahmen in der angegebenen Reihenfolge durchgeführt werden:
1. mittels der Verschlussvorrichtung (24) wird der Bypass (22) so weit geschlossen, dass die Zuluft die Zuluftminimaltemperatur nicht unterschreitet,
2. bei noch weiter sinkenden Außentemperaturen werden mittels der Verschlusseinrichtung (30) die Luftkanäle (5,6) so weit geschlossen und dadurch die Querverbindung (29) so weit geöffnet, dass die Temperaturen der Fortluft eine vorgebbare Fortluftminimaltemperatur nicht unterschreitet, wobei gleichzeitig mittels der Verschlussvorrichtung (24) der Bypass (22) so eingestellt wird, dass weiterhin die Zuluft die Zuluftminimaltemperatur nicht unterschreitet.

2. Verfahren nach Anspruch 1, **dadurch gekennzeichnet, dass** das Gerät (1) - bis auf den gegebenenfalls erfolgenden Betrieb der Wärmerückgewinnungseinrichtung (7) - keine thermische Behandlung der jeweiligen Luft vornimmt.

3. Verfahren nach einem der vorhergehenden Ansprüche, **dadurch gekennzeichnet, dass** im Raum (2) zumindest zeitweise eine Raumheizung (37) betrieben wird.

4. Verfahren nach einem der vorhergehenden Ansprüche, **dadurch gekennzeichnet, dass** das Einstellen der Verschlusseinrichtung (30) und/oder der Verschlussvorrichtung (24) gesteuert und/oder geregelt erfolgt/erfolgen.

5. Verfahren nach einem der vorhergehenden Ansprüche, **dadurch gekennzeichnet, dass** mittels einer Steuer- und/oder Regeleinrichtung (32) das Einstellen der Verschlusseinrichtung (30) und/oder der Verschlussvorrichtung (24) erfolgt.

6. Verfahren nach einem der vorhergehenden Ansprüche, **dadurch gekennzeichnet, dass** mittels an der Steuer- und/oder Regeleinrichtung (32) angeschlossenen Sensoren die Temperatur der Zuluft und die Temperatur der Fortluft ermittelt und in Abhängigkeit der ermittelnden Temperaturen die Verschlusseinrichtung (30) und/oder die Verschlussvorrichtung (24) eingestellt wird/werden.

7. Verfahren nach einem der vorhergehenden Ansprüche, **dadurch gekennzeichnet, dass** der Bypass (22) als Zuluftbypass (23) und/oder als Abluftbypass wirkend verwendet wird.

8. Verfahren nach einem der vorhergehenden Ansprüche, **dadurch gekennzeichnet, dass** die Zuluftminimaltemperatur im Bereich von 15°C bis 21°C liegt, insbesondere etwa 17°C beträgt.

9. Verfahren nach einem der vorhergehenden Ansprüche, **dadurch gekennzeichnet, dass** die Fortluftminimaltemperatur > 0°C, insbesondere etwa 2°C, beträgt.

10. Verfahren nach einem der vorhergehenden Ansprüche, **dadurch gekennzeichnet, dass** die Volumenströme der Luftfördereinrichtungen (18,19) mit schließender Verschlusseinrichtung (30) zur zumindest teilweisen Erhaltung des Außenluftvolumenstroms angehoben werden.

11. Lufttechnisches Gerät (1) zum Klimatisieren eines Raumes (2) eines Gebäudes oder dergleichen, mit einem ersten und einem zweiten Luftkanal (5,6), einer Querverbindung (29) zwischen den Luftkanälen (5,6), einer Wärmerückgewinnungseinrichtung (7), durch welche die Luftkanäle wärmetechnisch koppelbar sind, einer Verschlusseinrichtung (30), einem Bypass (22), einer Verschlussvorrichtung (24), wobei ein Abschnitt des ersten Luftkanals (5) einen Außenluftkanal (AU) bis zur Wärmerückgewinnungseinrichtung (7) bildet, von der Wärmerückgewinnungseinrichtung (7) ausgehend ein weiterer Abschnitt des ersten Luftkanals (5) einen Zuluftkanal (ZU) bildet, ein Abschnitt des zweiten Luftkanals (6) einen Abluftkanal (AB), der Raumluft aus dem Raum abführt und bis zur Wärmerückgewinnungseinrichtung leitet, bildet, und ab der Wärmerückgewinnungseinrichtung (7) ein weiterer Abschnitt des zweiten Luftkanals (6) einen Fortluftkanal (FO), der Luft in die Außenumgebung ableitet, bildet, wobei die Querverbindung (29) - zur Strömungsrichtung der Außenluft (AU) betrachtet - stromaufwärts zur Wärmerückgewinnungseinrichtung (7) ausgebildet ist und den Außenluftkanal (AU) mit dem Fortluftkanal (FO) verbindet, wobei die Luftkanäle (5,6) mittels der Verschlusseinrichtung (30) verschließbar oder teilweise oder ganz zu öffnen sind und dabei die Querverbindung (29) ganz geöffnet oder teilweise oder ganz geschlossen wird, und wobei der Bypass (22) die Wärmerückgewinnungseinrichtung (7) wärmetechnisch umgeht und mittels der einstellbaren Verschlussvorrichtung (24) verschließbar oder ganz oder teilweise zu öffnen ist, und einer das Einstellen der Verschlusseinrichtung (30) und/oder der Verschlussvorrichtung (24) vornehmenden Steuer- und/oder Regeleinrichtung (32) und Sensoren zur Temperaturermittlung, zur Durchführung des Verfahrens nach einem oder mehreren der vorhergehenden Ansprüche.

12. Raum (2) eines Gebäudes oder dergleichen, mit einem lufttechnischen Gerät (1) nach Anspruch 11.

13. Raum nach Anspruch 12, **dadurch gekennzeichnet, dass** er mindestens eine Raumheizung (37) aufweist.

## Claims

1. Method for operating a ventilation device (1) for air-conditioning a room (2) of a building or the like, incoming air (ZU) being introduced into the room (2) at temperatures which do not fall below a predeterminable minimum incoming air temperature (T_{ZU SOLL}), the device (1) having a first and a second air duct (5, 6) for guiding external air (AU), incoming air (ZU), exhaust air (AB), outgoing air (FO) and/or circulating air, the air ducts (5, 6) having a transverse connection (29) and being thermally couplable by means of a heat recovery means (7) and being closable or openable in part or completely by means of at least one adjustable closing means (30), and the transverse connection (29) thus being opened completely or closed in part or completely, and a bypass (22) which circumvents the heat recovery means (7) being provided, and being closable or openable completely or in part by means of an adjustable closing device (24), the transverse connection (29) being formed upstream from the heat recovery means (7) as seen in the direction of flow of the external air (AU), **characterised in that**, starting from completely open air ducts (5, 6) and a closed transverse connection (29) as well as a completely open bypass (22), as external air temperatures decrease the following measures are taken in the specified order:
1. by means of the closing device (24) the bypass (22) is closed sufficiently that the temperature of the incoming air does not fall below the minimum incoming air temperature,
2. if external temperatures fall even further, by means of the closing means (30) the air ducts (5, 6) are closed sufficiently and thus the transverse connection (29) is opened sufficiently that the temperature of the outgoing air does not fall below a predeterminable minimum outgoing air temperature, the bypass (22) simultaneously being adjusted by means of the closing device (24) in such a way that the temperature of the incoming air continuously does not fall below the minimum incoming air temperature.

2. Method according to claim 1, **characterised in that** the device (1) does not perform any thermal treatment of the respective air apart from the optionally occurring operation of the heat recovery means (7).

3. Method according to any of the preceding claims, **characterised in that** a room heating system (37) is operated in the room (2) at least at times.

4. Method according to any of the preceding claims, **characterised in that** the closing means (30) and/or the closing device (24) are adjusted in a controlled and/or regulated manner.

5. Method according to any of the preceding claims, **characterised in that** the closing means (30) and/or the closing device (24) are adjusted by means of a control and/or regulation means (32).

6. Method according to any of the preceding claims, **characterised in that** the temperature of the incoming air and the temperature of the outgoing air are determined by means of sensors connected to the control and/or regulation means (32), and the closing means (30) and/or the closing device (24) are adjusted as a function of the determined temperatures.

7. Method according to any of the preceding claims, **characterised in that** the bypass (22) is used acting as an incoming air bypass (23) and/or as an exhaust air bypass.

8. Method according to any of the preceding claims, **characterised in that** the incoming air minimum temperature is in the range of 15 °C to 21 °C, in particular being approximately 17 °C.

9. Method according to any of the preceding claims, **characterised in that** the outgoing air minimum temperature is > 0 °C, in particular approximately 2 °C.

10. Method according to any of the preceding claims, **characterised in that** when the closing means (30) is closing the volumetric flow rates of the air conveyance means (18, 19) are raised so as to maintain the external air volumetric flow rate at least in part.

11. Ventilation device (1) for air-conditioning a room (2) of a building or the like, having a first and a second air duct (5, 6), a transverse connection (29) between the air ducts (5, 6), a heat recovery means (7) via which the air ducts are thermally couplable, a closing means (30), a bypass (22), a closing device (24), a portion of the first air duct (5) forming an external air duct (AU) as far as the heat recovery means (7), a further portion of the first air duct (5) forming an incoming air duct (ZU) starting from the heat recovery means (7), a portion of the second air duct (6) forming an exhaust air duct (AB) which discharges room air from the room and passes it as far as the heat recovery means, and a further portion of the second air duct (6) forming, from the heat recovery means (7), an outgoing air duct (FO), which dissipates air into the external environment, the transverse connection (29) being formed upstream from the heat recovery means (7) as seen in the direction of flow of the external air (AU) and connecting the external air duct (AU) to the outgoing air duct (FO), the air ducts (5, 6) being closable or openable in part or completely by means of the closing means (30) and the transverse connection (29) thus being opened completely or closed in part or completely, and the bypass (22) thermally circumventing the heat recovery means (7), and being closable or openable completely or in part by means of the adjustable closing device (24), and a control and/or regulation means (32) which adjusts the closing means (30) and/or the closing device (24), and sensors for temperature determination, for carrying out the method according to one or more of the preceding claims.

12. Room (2) of a building or the like comprising a ventilation device (1) according to claim 11.

13. Room according to claim 12, **characterised in that** it has at least one room heating system (37).

## Revendications

1. Procédé de fonctionnement d'un appareil aéraulique (1) destiné à climatiser une pièce (2) d'un bâtiment ou similaire, dans lequel de l'air amené (ZU) ayant des températures est apporté dans la pièce (2), lesquelles ne dépassent pas vers le bas une température minimale prédéfinissable d'air amené (T_{ZU SOLL}), dans lequel l'appareil (1) présente un premier et un deuxième canaux d'air (5, 6) pour guider l'air extérieur (AU), l'air amené (ZU), l'air sortant (AB), l'air vicié (FO) et/ou l'air de circulation, dans lequel les canaux d'air (5, 6) possèdent une liaison transversale (29) et peuvent être couplés, du point de vue thermique, au moyen d'un dispositif de récupération de la chaleur (7) et peuvent être fermés au moyen d'au moins un dispositif de fermeture (30) réglable ou peuvent être ouverts en partie ou complètement, la liaison transversale (29) étant en même temps complètement ouverte ou fermée en partie ou complètement fermée, et dans lequel une dérivation (22) contournant le dispositif de récupération de la chaleur (7) est prévue, laquelle peut être fermée ou peut être ouverte complètement ou en partie au moyen d'un système de fermeture (24) réglable, dans lequel la liaison transversale (29) - en vue en direction d'écoulement de l'air extérieur (AU) - est réalisée en amont du dispositif de récupération de la chaleur (7), **caractérisé en ce que** - en partant de canaux d'air (5, 6) complètement ouverts et de la liaison transversale (29) fermée ainsi que de la dérivation (22) complètement ouverte - les mesures suivantes, lorsque les températures de l'air extérieur diminuent, sont réalisées dans l'ordre indiqué :
1. la dérivation (22) est fermée au moyen du système de fermeture (24) de manière à ce que l'air amené ne dépasse pas vers le bas la température minimale d'air amené,
2. lorsque les températures extérieures continuent de baisser, les canaux d'air (5, 6) sont fermés au moyen du dispositif de fermeture (30) et en conséquence la liaison transversale (29) est ouverte de manière à ce que les températures de l'air vicié ne dépassent pas vers le bas une température minimale prédéfinissable d'air vicié, la dérivation (22) étant simultanément réglée au moyen du système de fermeture (24) de manière à ce que l'air amené continue de ne pas dépasser vers le bas la température minimale d'air amené.

2. Procédé selon la revendication 1, **caractérisé en ce que** l'appareil (1) - sauf le fonctionnement du dispositif de récupération de la chaleur (7) ayant éventuellement lieu - ne réalise pas de traitement thermique de l'air respectif.

3. Procédé selon l'une quelconque des revendications précédentes, **caractérisé en ce qu'**un chauffage de pièce (37) est mis au moins temporairement en fonction dans la pièce (2).

4. Procédé selon l'une quelconque des revendications précédentes, **caractérisé en ce que** le réglage du dispositif de fermeture (30) et/ou du système de fermeture (24) est réalisé de manière commandée et/ou régulée.

5. Procédé selon l'une quelconque des revendications précédentes, **caractérisé en ce que** le réglage du dispositif de fermeture (30) et/ou du système de fermeture (24) est réalisé au moyen d'un dispositif de commande et/ou de régulation (32).

6. Procédé selon l'une quelconque des revendications précédentes, **caractérisé en ce que** la température de l'air amené et la température de l'air vicié sont détectées au moyen de capteurs raccordés au dispositif de commande et/ou de régulation (32) et **en ce que** le dispositif de fermeture (30) et/ou le système de fermeture (24) sont réglés/est réglé en fonction des températures détectées.

7. Procédé selon l'une quelconque des revendications précédentes, **caractérisé en ce que** la dérivation (22) est utilisée en agissant en tant que dérivation d'air amené (23) et/ou en tant que dérivation d'air sortant.

8. Procédé selon l'une quelconque des revendications précédentes, **caractérisé en ce que** la température minimale d'air amené est située dans la plage de 15 °C à 21 °C, notamment **en ce qu'**elle est d'environ 17 °C.

9. Procédé selon l'une quelconque des revendications précédentes, **caractérisé en ce que** la température minimale de l'air vicié est > 0 °C, notamment **en ce qu'**elle est d'environ 2 °C.

10. Procédé selon l'une quelconque des revendications précédentes, **caractérisé en ce que** les débits volumiques des dispositifs de transport d'air (18, 19), avec le dispositif de fermeture (30) fermant, sont augmentés pour le maintien au moins partiel du débit volumique de l'air extérieur.

11. Appareil aéraulique (1) destiné à climatiser une pièce (2) d'un bâtiment ou similaire, comprenant un premier et un deuxième canaux d'air (5, 6), une liaison transversale (29) entre les canaux d'air (5, 6), un dispositif de récupération de la chaleur (7), au moyen duquel les canaux d'air peuvent être couplés du point de vue thermique, un dispositif de fermeture (30), une dérivation (22), un système de fermeture (24), dans lequel appareil une section du premier canal d'air (5) forme un canal d'air extérieur (AU) jusqu'au dispositif de récupération de la chaleur (7), dans lequel, en partant du dispositif de récupération de la chaleur (7), une section supplémentaire du premier canal d'air (5) forme un canal d'air amené (ZU), dans lequel une section du deuxième canal d'air (6) forme un canal d'air sortant (AB) qui évacue l'air ambiant hors de la pièce et le conduit jusqu'au dispositif de récupération de la chaleur (7), et dans lequel, à partir du dispositif de récupération de la chaleur (7), une section supplémentaire du deuxième canal d'air (6) forme un canal d'air vicié (FO) qui évacue l'air dans les environs, dans lequel la liaison transversale (29) - en vue en direction d'écoulement de l'air extérieur (AU) - est réalisée en amont du dispositif de récupération de la chaleur (7) et relie le canal d'air extérieur (AU) au canal d'air vicié (FO), dans lequel les canaux d'air (5, 6) peuvent être fermés au moyen du dispositif de fermeture (30) ou peuvent être ouverts en partie ou complètement, la liaison transversale (29) étant en même temps complètement ouverte ou en partie fermée ou complètement fermée, et dans lequel la dérivation (22) contourne le dispositif de récupération de la chaleur (7) du point de vue thermique et peut être fermée au moyen du système de fermeture (24) réglable ou peut être ouverte complètement ou en partie, et comprenant un dispositif de commande et/ou de régulation (32) réalisant le réglage du dispositif de fermeture (30) et/ou du système de fermeture (24), et comprenant des capteurs pour la détection de la température, dans le but de réaliser le procédé selon une ou plusieurs des revendications précédentes.

12. Pièce (2) d'un bâtiment ou similaire, comprenant un appareil aéraulique (1) selon la revendication 11.

13. Pièce selon la revendication 12, **caractérisée en ce qu'**elle présente au moins un chauffage de pièce (37).
